Europäisches Patentamt

European Patent Office

Office européen des brevets

(19)

(11) Veröffentlichungsnummer : **0 362 626 B1**

(12) # EUROPÄISCHE PATENTSCHRIFT

(45) Veröffentlichungstag der Patentschrift :
**10.02.93 Patentblatt 93/06**

(51) Int. Cl.⁵ : **G01B 3/30,** G01B 5/00,
G01B 7/00, G01B 21/04

(21) Anmeldenummer : **89117454.2**

(22) Anmeldetag : **21.09.89**

(54) **Prüfkörper für Koordinatenmessgeräte.**

(30) Priorität : **03.10.88 DE 3833578**

(43) Veröffentlichungstag der Anmeldung :
**11.04.90 Patentblatt 90/15**

(45) Bekanntmachung des Hinweises auf die
Patenterteilung :
**10.02.93 Patentblatt 93/06**

(84) Benannte Vertragsstaaten :
**DE FR GB IT NL SE**

(56) Entgegenhaltungen :
**DE-A- 3 640 287
US-A- 4 364 182
PATENT ABSTRACTS OF JAPAN Band 12, Nr.
95 (P-681)(2942), 29. März 1988; & JP-
A-62228101 (KUNITOSHI NISHIMURA)
07.10.1987**

(73) Patentinhaber : **Firma Carl Zeiss
W-7920 Heidenheim (Brenz) (DE)**
(84) **DE FR IT NL SE**
Patentinhaber : **CARL ZEISS-STIFTUNG
HANDELND ALS CARL ZEISS
W-7920 Heidenheim (Brenz) (DE)**
(84) **GB**

(72) Erfinder : **Zeller, Rudolf
Lessingstrasse 3
W-7322 Winzingen (DE)**
Erfinder : **Neumann, Joachim
Bunsenstrasse 6
W-7082 Oberkochen (DE)**

EP 0 362 626 B1

## Beschreibung

Die Erfindung betrifft einen Prüfkörper für Koordinatenmeßgeräten in Form einer Kugelplatte, die mehrere in einer Ebene liegende Kugeln enthält.

Zur Prüfung von Koordinatenmeßgeräten werden derzeit in der Regel Stufenendmaße verwendet, die in verschiedenen Ausrichtungen, z.B. parallel oder diagonal zu den Meßachsen des Koordinatenmeßgerätes in dessen Meßvolumen aufgestellt werden. Diese Prüfungen, die nicht nur einmal während der Abnahme des Koordinatenmeßgerätes beim Hersteller sondern auch in regelmäßigen Abständen beim Anwender selbst durchgeführt werden, sind sehr zeitaufwendig. Die Prüfung mittels Stufenendmaßen liefert außerdem immer nur eindimensionale Aussagen über die Fehler des Meßgerätes. Da der gesamte Prüfablauf wie schon gesagt sehr lange dauert, besteht außerdem die Gefahr, daß der Einfluß von sich ändernden Temperaturen die Meßgenauigkeit beeinträchtigt.

Es ist auch bereits vorgeschlagen worden, Koordinatenmeßgeräte mit Hilfe von Kugelplatten zu prüfen. So ist beispielsweise in der US-PS 4,364,182 eine Kugelplatte mit einer dreidimensionalen Verteilung von Kugeln beschrieben. Derartige Prüfkörper besitzen jedoch keine ausreichende Eigenstabilität, so daß sich die Abstände zwischen den Kugeln relativ leicht ändern können. Es ist deshalb ein häufiges Nachkalibrieren des Prüfkörpers selbst erforderlich.

Aus der Zeitschrift "Technisches Messen" Band 51, Jahrgang 1984, Heft 3, Seite 83-95 sind verschiedene Prüfkörper, darunter auch solche in Form einer ebenen Lochplatte und einer ebenen Kugelplatte bekannt. Bei letzterer sind die Kugeln mittels zylindrischer Stelzen so auf die Oberfläche des flachen Tragkörpers aufgesetzt, daß sie alle in einer Ebene liegen. Ein solcher kalibrierter Prüfkörper wird dann in mehreren Stellungen, beispielsweise in raumschräger Anordnung, im Meßvolumen des zu prüfenden Koordinatenmeßgerätes aufgestellt.

Auch dieser bekannte Prüfkörper besitzt nur eine bedingte Langzeitstabilität. Außerdem ist er relativ schwer und besitzt den Nachteil, daß die darauf befestigten Kugeln nur von einer Seite aus angetastet werden können.

Die vorgenannten Prüfkörper wie Stufenendmaße, Kugelplatten und Lochplatten müssen außerdem kalibriert werden. Dies ist nur bei dafür eingerichteten Kalibrierstellen wie z.B. der Physikalisch-Technischen Bundesanstalt möglich. Ein Nachkalibrieren in regelmäßigen Zeitabständen ist deshalb mit einem relativ hohen Zeit- und Kostenaufwand verbunden.

Es ist die Aufgabe der vorliegenden Erfindung einen Prüfkörper zu schaffen, der möglichst langzeitstabil ist und leicht gehandhabt werden kann, und der ohne Einschränkung für die erforderlichen Genauigkeitsprüfungen, d.h. Prüfung der Längenmeßunsicherheit, der Antastunsicherheit und der Orthogonalität der Meßachsen eines Koordinatenmeßgerätes, geeignet ist.

Ausgehend von einem Prüfkörper in Form einer Kugelplatte, die aus einer Platte und mehreren in einer Ebene liegenden Kugeln besteht, wird diese Aufgabe gemäß den im Kennzeichen des Anspruchs 1 angegebenen Maßnahmen dadurch gelöst, daß die Kugeln symmetrisch im der parallel zur Plattenoberfläche verlaufenden Symmetrie ebene (S) der Platte (1) angeordnet sind und in einem oder mehreren Ausbrüchen der Platte bzw. am äußeren Rand der Platte befestigt sind.

Da die Kugeln in der Symmetrieebene der Platte, d.h. in ihrer neutralen Faser angeordnet sind, und infolge des symmetrischen Aufbaus besitzt der Prüfkörper eine sehr hohe Eigenstabilität. Verformungen der Platte beispielsweise aufgrund ihres Eigengewichtes beim Aufstellen wirken sich außerdem nur sehr geringfügig auf die Abstände der Kugeln zueinander aus.

Wegen der Langzeitstabilität einer solchen Kugelplatte ist ein Nachkalibrieren deshalb nur in relativ großen Zeitabständen erforderlich. Dieses Nachkalibrieren kann aber wie nachstehend noch beschrieben wird sehr einfach und schnell durchgeführt werden.

Denn hierzu ist es lediglich erforderlich, daß der Prüfkörper nach der Umschlagsmethode in zwei vorzugsweise um 90° gedrehten Stellungen auf einem Koordinatenmeßgerät gemessen und einmal die Länge eines Endmaßes auf dem gleichen Gerät bestimmt wird. Dieses Verfahren ist von H. Kunzmann und F. Wäldele in dem Artikel: "Zweidimensionale Prüfkörper zur Ermittlung der meßtechnischen Eigenschaften von Koordinatenmeßgeräten", Tagungsband Internationale Tagung "Moderne Fertigung und Fertigungsmeßtechnik", 2. - 4. April 1986, Technische Universität Wien, beschrieben.

Dieses Verfahren besitzt den Vorteil, daß es aufgrund seiner selbstkalibrierenden Eigenschaften auf dem gleichen Koordinatenmeßgerät durchgeführt werden kann, dessen Meßunsicherheit anschließend mit dem Prüfkörper bestimmt werden soll. Das Kalibrierverfahren kann deshalb auch vom Betreiber des Koordinatenmeßgerätes selbst an Ort und Stelle durchgeführt werden, ohne daß Servicepersonal des Herstellers hierzu angefordert werden muß.

Wenn die Befestigung der Kugeln ein Antasten des Prüfkörpers von beiden Seiten erlaubt, können mit dem Prüfkörper z.B. außerdem Rollwinkelfehler der senkrechten Pinole eines Koordinatenmeßgerätes ermittelt werden.

Es ist zweckmäßig, wenn mehrere der Kugeln auf Stützkörpern nach außen abstehend am Rand der Platte angebracht sind. Die Platte selbst kann dann klein gehalten werden und besitzt nur ein geringes Eigengewicht, so daß sie leicht handhabbar ist.

Weiterhin ist es zweckmäßig, die Platte mit einer Schutzabdeckung beispielsweise aus Aluminiumblech zu versehen. Eine derartige Abdeckung schützt die Kugeln gegen ein Anstoßen während der Prüfung. Ein Anstoßen würde andernfalls ein Nachkalibrieren erforderlich machen.

Es ist außerdem vorteilhaft, in die Platte zusätzlich einen Lehrring einzusetzen. Der Lehrring erlaubt eine Prüfung der sogenannten Scanning-Meßunsicherheit an den Koordinatenmeßgeräten, die mit einem sogenannten messenden Tastkopf ausgerüstet sind.

Weitere Vorteile der Erfindung ergeben sich aus der nachführend folgenden Beschreibung von Ausführungsbeispielen anhand der Figuren 1-4 der beigefügten Zeichnungen.

Fig. 1a ist eine Seitenansicht des erfindungsgemäßen Prüfkörpers;

Fig. 1b zeigt den Prüfkörper aus Fig. 1a in Aufsicht;

Fig. 2 ist eine vergrößerte Darstellung des Prüfkörpers aus Fig. 1 im Bereich der Kugel (3i);

Fig. 3a ist die Seitenansicht eines mit einer Abdeckung versehenen Prüfkörpers;

Fig. 3b zeigt den Prüfkörper aus Fig. 3a in Aufsicht.

Fig. 4 zeigt den Prüfkörper aus Fig. 1 während eines Kalibriervorganges zusammen mit einem Endmaß im Meßraum eines Koordinatenmeßgerätes;

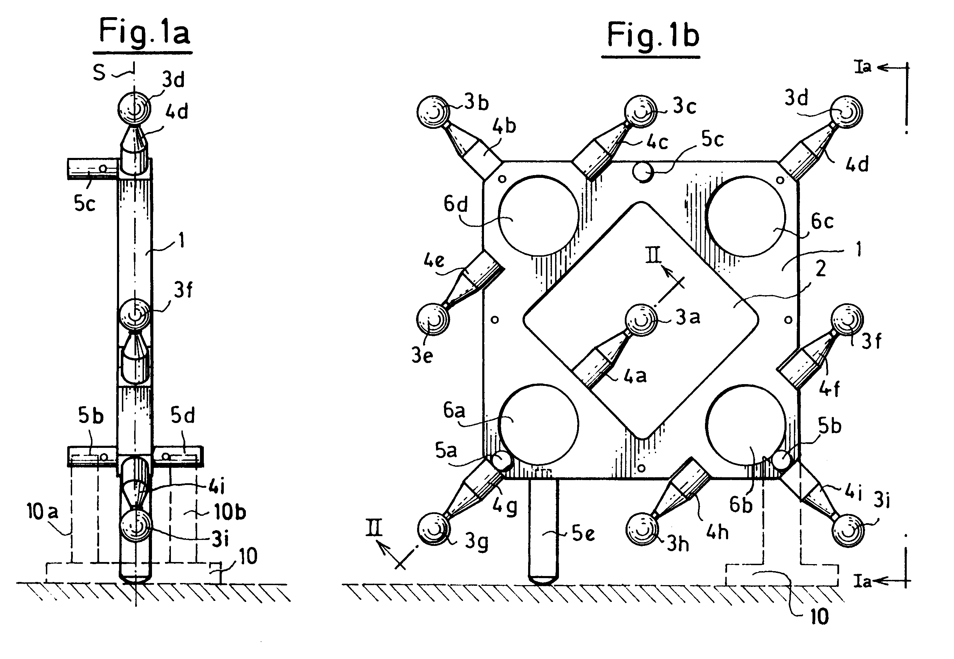

Der in Fig. 1a und b dargestellte Prüfkörper besitzt eine rechteckige Trägerplatte (1), die in der Mitte mit einer ebenfalls rechteckigen Ausnehmung (2) versehen ist. Die Platte (1) besteht aus einem Material mit geringer Wärmeausdehnung wie z.B. Invar oder Zerodur, damit die Abmessungen des Prüfkörpers von der Umgebungstemperatur weitgehend unabhängig bleiben.

Vom inneren Rand der Ausnehmung (2) ausgehend ist eine erste Kugel (3a) mit Hilfe einer konischen Stütze (4a) so an der Platte (1) befestigt, daß ihr Mittelpunkt mit dem Symmetriezentrum der Platte (1) zusammenfällt. An den abgeflachten Ecken der Platte (1) sind auf diagonal ausgerichteten Stützfüßen (4b, 4d, 4g und 4i) vier weitere Kugeln (3b, 3d, 3g und 3i) befestigt. Diese Kugeln bilden ein Rechteck. Auf den vier Seitenhalbierenden dieses Rechteckes liegend sind ebenfalls vier Kugeln (3c, 3e, 3f und 3h) auf schräg nach außen abstehenden Stützen (4c, 4f, 4e und 4h) befestigt.

Alle diese Kugeln, die wie für Prüfkörper üblich aus Keramikmaterial wie z.B. Aluminiumoxid bestehen, liegen in der in Fig. 1a mit (S) bezeichneten Symmetrieebene der Platte (1).

In die vier Ecken der Platte (1) sind vier kreisförmige Ausnehmungen (6a-d) eingebracht. Diese Ausnehmungen reduzieren das Gewicht der Platte (1). In eine der Ausnehmungen (6a) ist außerdem ein Lehrring eingesetzt. Der Lehrring erlaubt die Prüfung der sogenannten Scanning-Meßunsicherheit von Koordinatenmeßgeräten mit messendem Tastkopf.

An eine Seite der Platte (1) sind jeweils drei Stützfüße (5a-c) angeschraubt. Mit diesen Stützfüßen kann der Prüfkörper flach auf den Meßtisch eines Koordinatenmeßgerätes aufgesetzt werden.

Die Platte (1) besitzt zusätzlich einen weiteren Stützfuß (5d) in Verlängerung des Stützfußes (5a) auf der anderen Seite der Platte sowie einen von einer Stirnseite abstehenden Stützfuß (5e). Mit Hilfe dieser zusätzlichen Stützen (5d,5e) kann der Prüfkörper wie in Fig. 1a und Fig. 1b angedeutet senkrecht auf dem Tisch eines Koordinatenmeßgerätes aufgestellt werden. Hierbei liegen die Stützfüße (5a und 5d) in V-förmigen Nuten zweier Säulen (10a und 10b) eines Aufstellbockes (10).

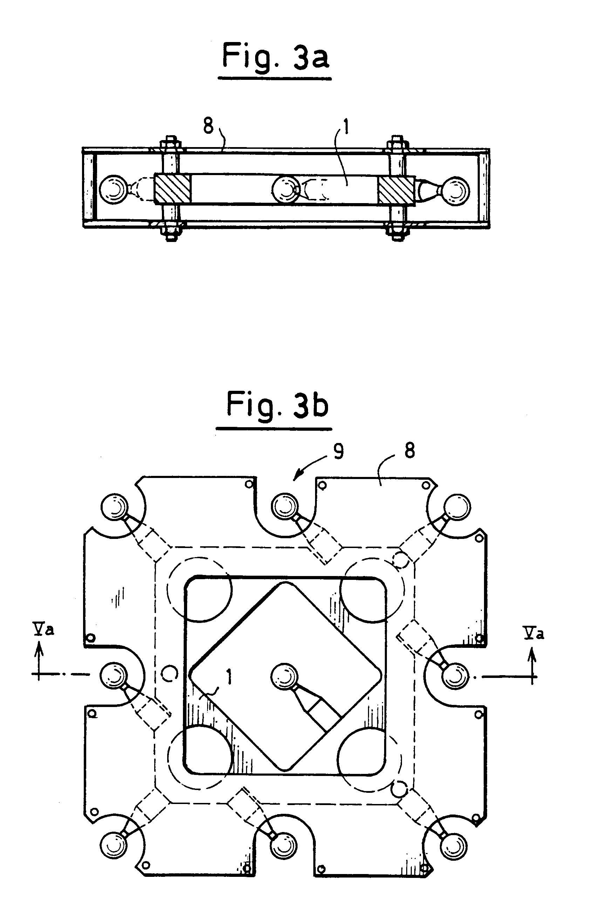

Zum Schutze der Kugeln (3) gegen Anstoßen ist der Prüfkörper wie in den Figuren 3a und 3b dargestellt mit einer Schutzabdeckung aus Aluminiumblech versehen. Diese Schutzabdeckung (8) kann an den Aufstellfüßen befestigt werden und besteht aus zwei einander gegenüberliegenden Plattenhälften, die durch sie verbindende Rippen versteift sind und über den Außenumfang der Platte (1) hinaus soweit vorspringen, daß sie die Kugeln gegen Anstoßen schützen.

Im Bereich der Kugeln selbst sind die Plattenhälften mit halbkreisförmigen Ausnehmungen versehen, damit die Kugeln für das Antasten zugänglich bleiben.

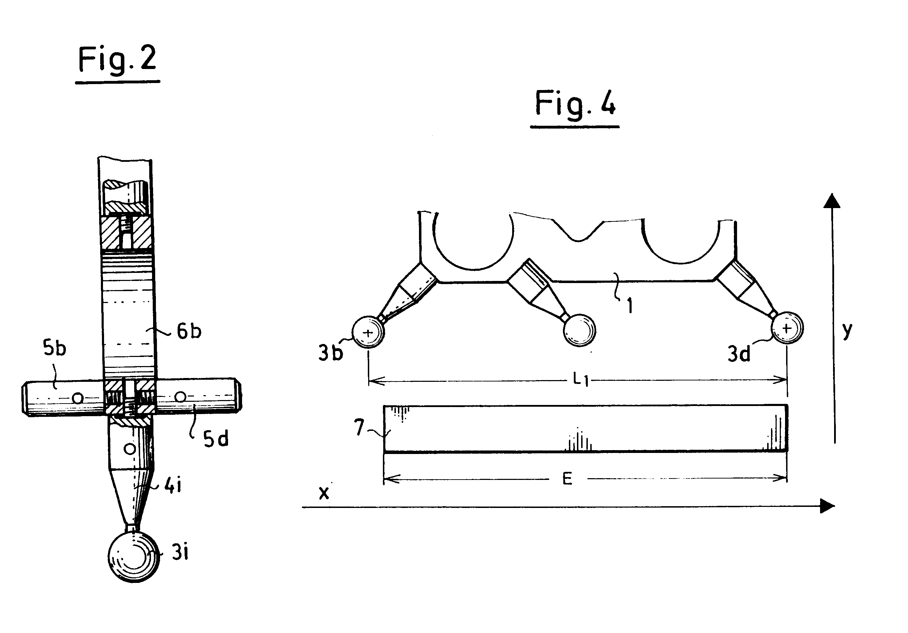

Damit der beschriebene Prüfkörper für die Bestimmung der Meßunsicherheit von Koordinatenmeßgeräten eingesetzt werden kann, muß er vorher kalibriert werden. Diese Kalibriervorgang wird unter Bezugnahme auf die Darstellung in Fig. 4 nachstehend beschrieben:

Zuerst wird der Prüfkörper (1) im Meßvolumen eines Koordinatenmeßgerätes beispielsweise so ausgerichtet, daß seine Seitenlinien etwa parallel zu den Meßachsen des Gerätes verlaufen. Hierzu kann er mit den Stützfüßen (5a-c) flach auf den Meßtisch aufgelegt werden. Es ist nicht erforderlich, daß es sich bei dem Koordinatenmeßgerät um ein bezüglich seiner Meßgenauigkeit bereits überprüftes Gerät handelt. Vielmehr kann zur Kalibrierung des Prüfkörpers durchaus das gleiche, bezüglich seiner Meßunsicherheit unbekannte Koordinatenmeßgerät verwendet werden, dessen Meßunsicherheit erst anschließend nach dem Kalibriervorgang mit Hilfe des Prüfkörpers bestimmt werden soll.

Dies ist aufgrund der selbstkalibrierenden Eigenschaften des nachstehend beschriebenen Meßverfahrens möglich. Vergleichsmessungen bei denen der Prüfkörper einmal auf einem hochgenauen Koordinatenmeßgerät und zum anderen auf einem KMG kalibriert wurde, das eine Meßunsicherheit von mehr als 12 um besaß und somit außerhalb der spezifizierten Toleranz lag, ergaben innerhalb einer Streubreite von 1 µm die gleichen Kalibrierdaten für den Prüfkörper.

In der Darstellung nach Fig. 4 ist der Prüfkörper (1) so im Meßvolumen des Koordinatenmeßgerätes aufgelegt, daß die durch die Kugeln (3g und 3i) definierte Seitenlinie etwa parallel zur Meßachse (x) verläuft. Ebenfalls parallel zu dieser Achse (x) ausgerichtet ist ein mit (7) bezeichnetes Endmaß im Meßvolumen des Gerätes aufgestellt.

In der gezeigten Stellung werden nun die Koordinaten der Mittelpunkte aller neun Kugeln (3a-3i) des Prüfkörpers gemessen.

Anschließend wird der Prüfkörper (1) um seine Flächennormale herum um 90° gedreht. In dieser Stellung werden ebenfalls die Koordinaten aller Kugeln gemessen. Sodann bildet der mit dem Kalibrierprogramm geladene Rechner des Koordinatenmeßgerätes die Mittelwerte über die in beiden Stellungen gemessenen Abstände oder Mittenpositionen der Kugeln.

Für die Mittelwertbildung werden natürlich nicht die im Maschinenkoordinatensystem des Meßgerätes gewonnenen Meßwerte, sondern die in das Koordinatensystem des Prüfkörpers übertragenen Werte herangezogen. Die dafür nötige Koordinatentransformation kann in 3 Schritten wie folgt ablaufen: Zuerst wird eine durch die neun Kugelmittelpunkte bestangepaßte Ebene festgelegt. Danach wird die Drehlage der Ebene durch eine Gerade festgelegt, die beispielsweise eine der drei an die Kugeltripel 3b/3c/3d bzw. 3e/3a/3f oder 3g/3h/3i bestangepaßte Gerade sein kann, oder besser der Mittelwert dieser drei Geraden. Der Nullpunkt des Koordinatensystems wird schließlich per Definition in den Schwerpunkt der neun Kugelmittelpunkte des Prüfkörpers gelegt. Alle neun Kugeln tragen so in gleicher Weise zur Bildung des Referenzkoordinatensystems des Prüfkörpers bei.

Infolge der Umschlagsmessung werden die von der x-Meßachse und der y-Meßachse des Koordinatenmeßgerätes gemessenen und angezeigten Längen ($L_A$x und $L_A$y) gemittelt, d.h.

$$L_A M = \frac{L_A x + L_A y}{2} \quad (1)$$

In diesen Mittelwert ($L_A$M) gehen die Maßstabsfehler der beiden Meßachsen (x und y) beide ein. Auch die Abweichung von der Rechtwinkligkeit wird so gemittelt.

Anschließend wird die Länge des Endmaßes (7) gemessen. Hierzu kann der Prüfkörper (1) vom Meßtisch des Koordinatenmeßgerätes entfernt und das Endmaß (7) an der Stelle aufgespannt werden, an der sich die Kugeln (3g/3i) des Prüfkörpers befanden. Aus der wahren Endmaßlänge (E) und der angezeigten Endmaßlänge ($E_A$) läßt sich ein Korrekturfaktor

$$K_1 = \frac{E}{E_A} \quad (2)$$

berechnen.

Nun wird einer der gemessenen Kugelabstände, beispielsweise die Länge ($L_1$) zwischen den Mittelpunkten der Kugeln (3g und 3i) mit der Länge des Endmaßes (7) verglichen. Für den Fall, daß die Länge ($L_1$) und das Endmaß (E) etwa gleich lang sind, darf der gewonnene Korrekturfaktor ($K_1$) auch zur Korrektur der angezeigten Länge ($L_A$) verwendet werden. Für die wahre Länge ($L_1$) gilt daher

$$L_1 = K_1 \cdot L_A \quad (3)$$

Man kann nun einen Korrekturfaktor (K) einführen, mit dem die angezeigten über beide um 90° gedrehten Stellungen gemittelten Längen ($L_A$M) multipliziert werden müssen, um den wahren Mittelwert der Längen ($L_M$) zu erhalten. D.h.

$$LM = K \cdot L_A M \quad (4)$$

Der wahre Mittelwert (LM) des Kugelabstandes (3g/3i) muß außerdem identisch sein mit dem über den Endmaßanschluß korrigierten, wahren Längenmeßwert ($L_1$), der in der einen Stellung parallel zum Endmaß ermittelt wurde, d.h.

$$LM = L_1 \quad (5)$$

Aus dieser Bedingungsgleichung und der Definitionsgleichung (4) ergibt sich in Verbindung mit (3)

$$K \cdot L_A M = K_1 \cdot L_A \quad (6)$$

und nach Einsetzen von (2) folgt daraus für den Korrekturfaktor (K):

$$K = \frac{L_A}{L_A M} \cdot \frac{E}{E_A}. \quad (7)$$

Die wahren Längen bzw. die tatsächlichen Abstände zwischen beliebigen der neun Kugeln des Prüfkörpers (1) ergeben sich somit durch Multiplizieren der aus beiden Aufstellungen des Prüfkörpers (1) gewonnenen Mittelwerte (LM) für jede Länge mit dem Korrekturfaktor (K), wobei dieser Korrekturfaktor durch die Vergleichsmessung einer Länge mit dem Endmaß (7) gemäß Gleichung (7) bestimmt wird.

Nach Durchführung der genannten Messungen und Berechnungen ist der Prüfkörper (1) kalibriert und kann zur Überprüfung der Meßunsicherheit entweder des gleichen oder eines anderen Koordinatenmeßgerätes verwendet werden. Zum Verfahrensablauf ist noch anzumerken, daß die Abfolge von Meß- und Rechenschritten im Hinblick auf eine möglichst kurze Meßzeit optimiert werden kann, indem ein Teil der Rechenschritte wie z.B. die Berechnung der Mittelwerte in der Zeit erfolgt, in der das Endmaß aufgespannt wird.

Das vorstehend anhand der Kugelplatte beschriebene Kalibrierverfahren ist natürlich auch zur Kalibrierung von anderen ebenen Prüfkörpern wie z.B. einer Lochplatte geeignet.

Die eigentliche Überprüfung der Meßunsicherheit eines Koordinatenmeßgerätes mit Hilfe des kalibrierten Prüfkörpers (1) erfolgt dann in an sich bekannter Weise dadurch, daß der Prüfkörper in unterschiedlicher Ausrichtung an verschiedenen Stellen im Meßvolumens des Gerätes aufgestellt und durch Antasten seiner neun Kugeln gemessen wird. Aus den Abweichungen der angezeigten Abstandsmaße zu den kalibrierten Kugelabständen des Prüfkörpers lassen sich dann in erster Linie die Längenmeßunsicherheit, aber auch andere Meßfehler wie z.B. Abweichungen von der Orthogonalität der Meßachsen des Gerätes bestimmen. Durch Abfahren des Lehrringes (6a) des Prüfkörpers kann zusätzlich die Scanningmeßunsicherheit bestimmt werden.

An dieser Stelle soll angemerkt werden, daß ein solcher Prüfkörper nicht nur zur Bestimmung der Meßunsicherheit von Koordinatenmeßgeräten benutzt werden kann, sondern auch dazu geeignet ist die Positionsunsicherheit von Bearbeitungsmaschinen, beispielsweise von flexiblen Fertigungssystemen zu bestimmen. Da heute bereits von vielen Herstellern Tastköpfe angeboten werden, die anstelle des Werkzeugs in eine Bearbeitungsmaschine eingewechselt werden können, ist für Bearbeitungsmaschinen in ähnlicher Weise wie für Koordinatenmeßgeräte ein CNC-gesteuertes Überprüfen der Meßunsicherheit bzw. Positionsunsicherheit gegeben.

Die erforderliche Lernprogrammierung der Antastvorgänge der Bearbeitungsmaschine kann über deren Maschinensteuerung erfolgen. Für die anschließende Verknüpfung der Meßergebnisse und die Auswertung kann ein autarker Rechner, beispielsweise ein Personalcomputer mit entsprechender Programmierung eingesetzt werden.

## Patentansprüche

1. Prüfkörper für Koordinatenmeßgeräte und Bearbeitungsmaschinen in Form einer Kugelplatte, die aus einer Platte (1) und mehreren, in einer Ebene liegenden Kugeln besteht, dadurch gekennzeichnet, daß
   - die Kugeln (3a-i) symmetrisch in der parallel zur Plattenoberfläche verlaufenden Symmetrie ebene (S) der Platte(1) angeordnet sind und in einem oder mehreren Ausbrüchen der Platte (1) bzw. am äußeren Rand der Platte befestigt sind.

2. Prüfkörper nach Anspruch 1, dadurch gekennzeichnet, daß die Befestigung der Kugeln ein Antasten des Prüfkörpers von beiden Seiten ermöglicht.

3. Prüfkörper nach Anspruch 1, dadurch gekennzeichnet, daß mehrere der Kugeln (3b-i) auf Stützkörpern (4b-i) nach außen abstehend am Rand der Platte angebracht sind.

4. Prüfkörper nach Anspruch 1, dadurch gekennzeichnet, daß vorzugsweise drei Aufstellfüße (5a-c) auf mindestens einer Seite der Platte (1) angebracht sind.

5. Prüfkörper nach Anspruch 1, dadurch gekennzeichnet, daß die Platte (1) mit einer Schutzabdeckung (8) versehen ist.

6. Prüfkörper nach Anspruch 1, dadurch gekennzeichnet, daß in die Platte zusätzlich ein Lehrring (6a) eingesetzt ist.

## Claims

1. A test member for coordinate-measuring instruments and machine tools in the form of a ball plate comprising a plate (1) and a plurality of balls lying in a plane, characterized by the fact that the balls (3a-i) are arranged symmetrically in a symmetry plane (S), which is parallel to the surface of the plate (1), and are mounted in one or more cutouts in the plate (1) or at the outer edge of the plate.

2. A test member according to claim 1, characterized by the fact that the mounting of the balls permits probe contacting of the test member on both sides of the plate.

3. A test member according to claim 1, characterized by the fact that some of the balls (3b to i) are mounted by support bodies (4b to i) which project outwardly of the edge of the plate.

4. A test member according to claim 1, characterized by the fact that preferably three spaced mounting feet (5a to c) are provided on at least one side of the plate.

5. A test member according to claim 1, characterized by the fact that the plate is provided with a protective cover (8).

6. A test member according to claim 1, characterized by the fact that an additional ring (6a) is put at a cutout in the plate.

## Revendications

1. Corps de contrôle pour appareils de mesure de coordonnées et machines d'usinage, réalisé sous la forme d'une plaque à billes, constituée par une plaque (1) et plusieurs billes disposées dans un plan, caractérisé en ce que
   - les billes (3a-i) sont disposées symétriquement dans le plan de symétrie (S) de la plaque (1), parallèle à la surface de cette plaque, et sont fixées dans un ou plusieurs évidements de la plaque (1) ou sur le bord extérieur de cette dernière.

2. Corps de contrôle selon la revendication 1, caractérisé en ce que la fixation des billes permet un palpage du corps de contrôle sur les deux faces de la plaque.

3. Corps de contrôle selon la revendication 1, caractérisé en ce que plusieurs des billes (3b-i) sont montées sur des corps de support (4b-i) qui font saillie à l'extérieur sur le bord de la plaque.

4. Corps de contrôle selon la revendication 1, caractérisé en ce que de préférence trois pieds d'appui (5a-c) sont installés sur au moins une face de la plaque (1).

5. Corps de contrôle selon la revendication 1, caractérisé en ce que la plaque (1) est équipée d'une enveloppe de protection (8).

6. Corps de contrôle selon la revendication 1, caractérisé en ce qu'en outre une bague de calibrage (6a) est insérée dans la plaque.

# Fig.1a

# Fig.1b

EP 0 362 626 B1

# Fig. 3a

# Fig. 3b

# Fig. 2

5b

6b

5d

4i

3i

# Fig. 4

3b

1

3d

$L_1$

7

E

x

y

EP 0 362 626 B1